# EUROPEAN PATENT SPECIFICATION

(11) **EP 2 344 733 B1**
(45) Date of publication and mention of the grant of the patent: **21.10.2015**
(21) Application number: 08852559.7
(22) Date of filing: 21.11.2008
(51) Int. Cl.: F01N 3/022

(54) **METAL FIBER FILTER FOR PURIFYING EXHAUST GAS HAVING SLOT TYPE BY-PASSING PART**
METALLFASERFILTER ZUR REINIGUNG VON ABGAS MIT EINEM SCHLITZFÖRMIGEN BYPASS
FILTRE A FIBRES METALLIQUES POUR PURIFIER UN GAZ D'ECHAPPEMENT POSSEDANT UNE PARTIE DE DERIVATION DE TYPE FENTE

(30) Priority: 22.11.2007 KR 20070119844
(43) Date of publication of application: 20.07.2011
(73) Proprietor: Johnson Matthey Catalysts Korea Limited, Jangan-Myun Hwasung Kyunggi (KR)
(72) Inventor: MATSUDA, Kunisuke, Utsunomiya City, Tochigi 329-1116 (JP); YOON, Young Hoon, Seoul 100-834 (KR); LEE, Duck-eui, Goyang-city (KR); PARK, Man-ho, Seoul (KR); KIL, Seung-mahn, Namyangju-city (KR); LEE, Se-young, Seoul (KR); LEE, Gyu-chan, Goori-city (KR); WOO, Jong-hyen, Pajoo-city (KR); WON, Chang-hyen, Pajoo-city (KR)
(74) Representative: Turberville, Simon
(86) International application number: PCT/IB2008/054898
(87) International publication number: WO 2009/066266

(56) References cited:
- EP-A- 1 038 566
- EP-A- 1 219 794
- EP-A- 1 604 726
- WO-A-2005/066469
- US-A1- 2006 120 937

## Description

The present invention relates to a filter for purifying exhaust gas having differential pressure characteristics, and more particularly, to a filter for purifying exhaust gas having improved differential pressure characteristics.

Although diesel engines have advantages that they have high thermal efficiency and superior durability, they emit a large amount of particulate matters (PM) and nitrogen oxide (NOₓ). Such PM and nitrogen oxide pollute the air. In particular, the particulate matter is very harmful to the human body because it exhibits a high adsorption rate to the respiratory system. Recently, as the particulate matter and nitrogen oxide has been increasingly emitted from the diesel vehicles, the emission of particulate matter and nitrogen oxide becomes a serious social issue. To this end, the Diesel Vehicle Environmental Protection Committee in the Ministry of Environmental Protection in Korea has recently established a plan to tighten the allowance standards for the emission of exhaust gas and to oblige attachment of a smoke post-treating device (diesel PM filter (DPF), diesel oxidation catalyst (DOC), etc.) when diesel cars were approved to be sold.

Particulate matter in exhaust gas emitted from a diesel engine includes particulates such as carbon-containing particulates, sulfur-containing particulates (e.g., sulfate), and high molecular weight hydrocarbon particulates. Since such particulate matter is emitted in a light particulate form and floats in the air, the particulate causes environmental pollution, reduced visibility, pulmonary diseases, etc. Such particulate matter in the exhaust gas has been removed using conventional diesel particulate filters (hereinafter, referred to as 'DPF').

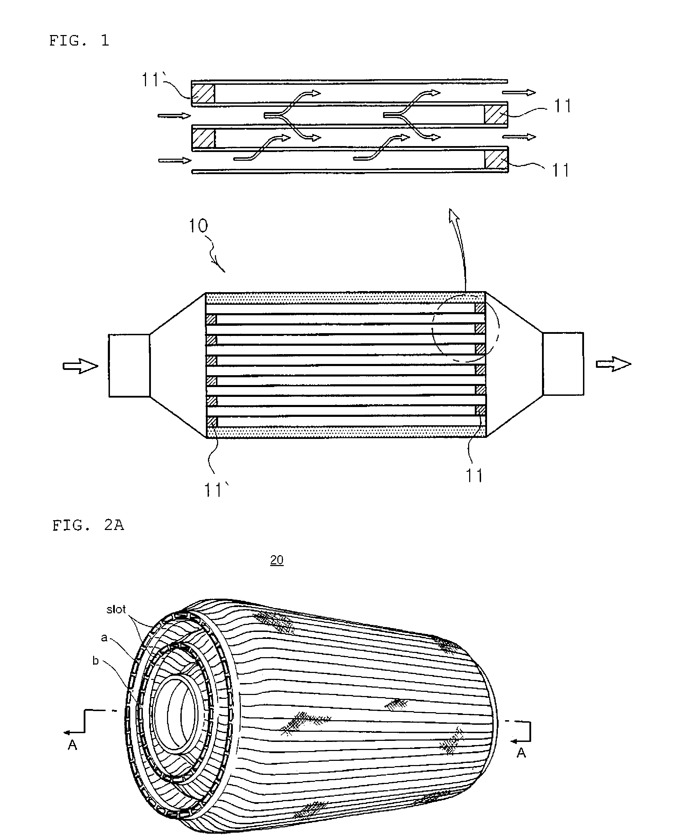

DPF functions to reduce the emission of particulate matter by collecting the particulate matter in the exhaust gas. FIG. 1 shows a side cross-sectional view of a DPF filter 10 that has been generally used in the art. As shown in FIG. 1, both ends 11 and 11' of the filter remain closed in an alternate manner, and therefore particulate matter collected in the filter is accumulated inside the closed both ends 11 and 11' of the filter, which leads to the clogging of the filter. When the filter is clogged with the particulate matter, a differential pressure increases, thereby making it impossible to easily discharge exhaust gas. As a result, the performance of the engine is degraded.

In order to recover the performance of the filter, soot caught by the filter should be burnt to regenerate the filter. Generally, the filter regeneration method includes a method using a catalyst and a method for burning PM using external energy. However, the regeneration of filter requires lots of the cost and time.

WO 2005/066469 teaches a particle filter. The filter comprises a casing and at least one body disposed in the casing, having at least one metallic fiber layer. The metallic fiber layer has an area-related thermal capacity in a range of from 400-1200 Joule per Kelvin and square meter [J/Km²], and forms a multiplicity of spatially separate flow paths through said body, with the flow paths each having a flow restrictor at least at one location.

EP 1219794 describes an exhaust gas purification filter of a honeycombed structure having a multiplicity of cells surrounded by partitioning walls. At least some of the cells each have a plug at one of the end portions thereof, and at least some of the plugs are arranged on the downstream side of the honeycombed structure in the fluid path and are partial plugs each have an opening allowing the fluid to pass therethrough.

A filter for purifying particulate matter in exhaust gas is needed, the filter being able to be used for an extended time without the increase in back pressure by improving differential pressure characteristics of a filter.

According to a first aspect, the invention provides a filter having a tubular structure in which a plurality of filter members are arranged telescopically, wherein each of the filter members is made of a plurality of metal fibers, ends of the two adjacent filter members are jointed to each other by a joint, and the joint in an end of one filter member is alternately arranged on another joint in an end of the other filter member, and a plurality of slots are formed in at least one joints in two opposite ends of each filter member, wherein the slots are formed at the joints formed in exhaust gas inlets of the filter.

The filter having a plurality of slots formed at joints that are formed in ends of a filter member according to the present invention may be useful to prevent the increase in pressure difference (differential pressure, back pressure) in front/back ends of the filter since some of smokes are blown out since the smokes are by-passed by slots although the smokes are caught and accumulated in a surface of the filter member. Accordingly, the filter according to the present invention may be useful to prevent the decrease in vehicle power even when the filter catches smokes in an amount that is greater than the maximum collecting capacity since the excessive smokes hardly affect the blow-out of particulate matter and the pressure in front/back ends of a filter. Also, the filter according to the present invention may be useful to prevent particulate matter accumulated inside a filter from flowing out all at once from the filter since the slots are formed in inlets of the filter.

In embodiments, the slots have an area that is less than or equal to 50% of a sectional area of an exhaust gas pipe.

In further embodiments, the slots are formed at an equal distance.

In further embodiments, the slots are formed at the joints formed in both ends of the filter member.

According to particular embodiments, the filter member is a metal fiber media comprising a metal fiber mat made of a plurality of unidirectionally-oriented metal fibers and having a porosity of 30 to 95%, and supports attached respectively to upper and lower surfaces of the metal fiber mat and having a porosity of 5 to 95%.

According to a second aspect, the invention provides the use of a filter according to the invention for purifying exhaust gas emitted from a diesel engine or a diesel generator.

According to a third aspect, the invention provides an exhaust system for a diesel engine or a diesel generator comprising a filter according to the invention, wherein the slots are formed at the joints formed in exhaust gas inlets of the filter.

The above and other aspects, features and other advantages of the present invention will be more clearly understood from the following detailed description taken in conjunction with the accompanying drawings, in which:
FIG. 1 is a side cross-sectional view illustrating a conventional filter for purifying exhaust gas,
FIG. 2A is a perspective view illustrating a filter having improved differential pressure characteristics according to the present invention,
FIG. 2B is a side cross-sectional view taken from a line A-A of the filter having improved differential pressure characteristics according to the present invention,
FIG. 2C is a photographic diagram illustrating an inlet of the filter having improved differential pressure characteristics according to the present invention,
FIG. 2D is a photographic diagram illustrating an outlet of the filter having improved differential pressure characteristics according to the present invention,
FIG. 3 is a conceptual diagram illustrating the filter having improved differential pressure characteristics according to the present invention,
FIG. 4 is a schematic view illustrating components of a metal fiber media and a method for preparing the metal fiber media used as a filter member of the present invention,
FIG. 5A is a diagram illustrating a metal fiber mat made of unidirectionally-oriented metal fibers according to one exemplary embodiment of the present invention,
FIG. 5B is a diagram illustrating a metal fiber mat formed by uniformly arranging unidirectionally-oriented metal fiber yarns in a longitudinal direction according to one exemplary embodiment of the present invention,
FIG. 5C is a diagram illustrating a metal fiber mat made of two layers of unidirectionally-oriented metal fiber yarns according to one exemplary embodiment of the present invention, the metal fiber yarns being arranged uniformly in a longitudinal direction,
FIG. 6A is a photograph illustrating randomly-oriented metal fibers manufactured according to a melt extraction process,
FIG. 6B is an SEM photograph (x200) illustrating a cross-section of metal fibers manufactured according to the melt extraction process,
FIG. 6C is an SEM photograph (x600) illustrating a side surface of metal fibers manufactured according to the melt extraction process,
FIG. 7A is a diagram illustrating a method for manufacturing a corrugated metal fiber media (filter member) according to one exemplary embodiment of the present invention,
FIG. 7B is a diagram illustrating a corrugated metal fiber media (filter member) manufactured according to one exemplary embodiment of the present invention,
FIG. 8 is a diagram illustrating an apparatus used for the melt extraction of the metal fibers according to one exemplary embodiment of the present invention, and
FIG. 9 is a graph illustrating the change in differential pressure (DP) depending on the change in smoke collecting capacity that is measured in Example 1.

Exemplary embodiments of the present invention will now be described in detail with reference to the accompanying drawings.

The filter having improved differential pressure characteristics according to the present invention has a tubular structure in which a plurality of filter members are arranged telescopically, wherein ends of the two adjacent filter members are jointed to each other by a joint, and the joint in an end of one filter member is alternately arranged on another joint in an end of the other filter member, and a plurality of slots are formed in at least one joints in two opposite ends of each filter member.

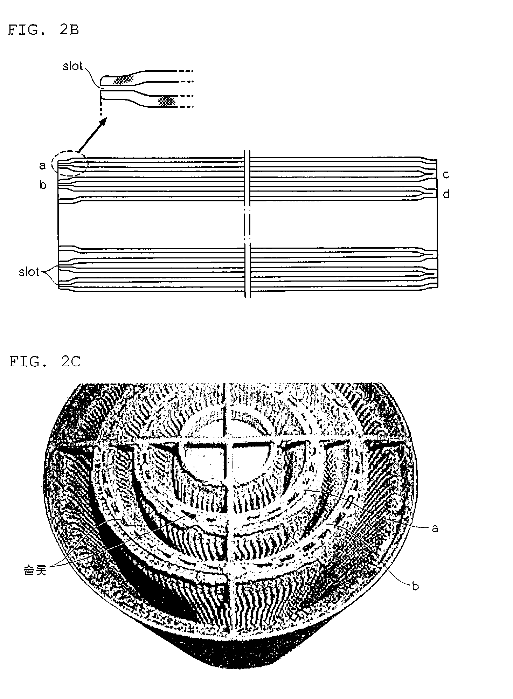

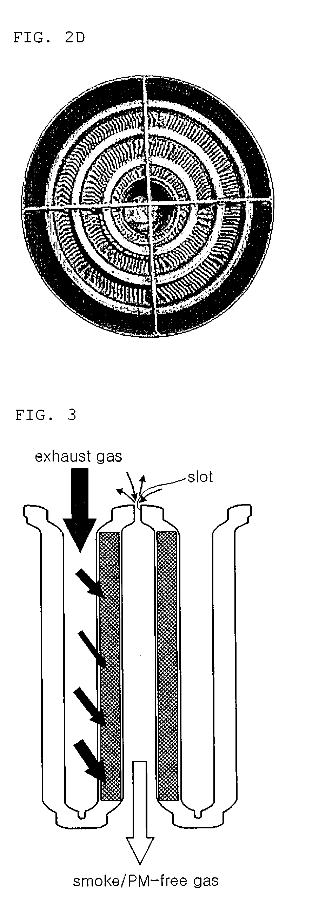

FIG. 2A shows a filter 20 according to the present invention including a plurality of 5-sheet corrugated filter members whose joints have slots formed in one end thereof, and which are coaxially arranged telescopically around an axis extending in a flow direction of exhaust gas. As shown in FIG. 2B showing a side cross-sectional view taken from a line A-A of the filter as show in FIG. 2A, the joints a, b, c and d formed at both ends of the filter member are arranged alternately with each other to form a filter in an integral form, and a plurality of slots are formed at such joints. The slots may be formed in at least one joints in two opposite ends of each filter member. When the slots are formed at the joints formed in one end of the filter member, the slots may be formed in an end of an exhaust gas inlet or outlet. Since particulate matter accumulated inside the filter flows out all at once if the slots are formed at the joints formed in the exhaust gas outlet of the filter member, the slots are preferably formed at the joints formed in an exhaust gas inlet of the filter. The slots may be preferably formed at an equal distance. FIG. 2C and 2D show a photograph illustrating an inlet of a filter having slots formed at joints, and a photograph illustrating an outlet of the filter, respectively. For the filter according to the present invention, the slots are formed so that they have an area that is less than or equal to 50% of a sectional area of an exhaust gas pipe that allows exhaust gas to flow in the filter. Since the slots should be necessarily formed at the joints, there is no particular limitation on the lowest value in an area of the slots except for the null area of the slots. And, the slots are preferably formed with an area that is less than or equal to 50% of a sectional area of an exhaust gas pipe so as to allow only a very little amount of exhaust gas, which has passed through the filter, to pass through the slots, and to prevent the decrease in a smoke reduction ratio.

The filter having a plurality of slots formed at joints of a filter member according to the present invention prevents the increase in pressure in front/back ends of the filter since the slots function as bypasses to discharge some of smokes although the smokes are caught and accumulated in a surface of the filter member. FIG. 3 shows a concept of preventing the increase in differential pressure in the filter having a plurality of slots formed at joints of a filter member according to the present invention. As shown in FIG. 3, the increase in the differential pressure is prevented since exhaust gas flows in or out through the slots although the smokes are accumulated in the surface of the filter member.

The filter having a plurality of slots formed at joints of a filter member according to the present invention includes any of filters having a tubular structure in which a plurality of filter members are arranged telescopically, wherein ends of the two adjacent filter members are jointed to each other by a joint, and the joint in an end of one filter member is alternately arranged on another joint in an end of the other filter member, and a plurality of slots are formed in at least one joints in two opposite ends of each filter member. And, there is no limitation on materials of the filter member, but the filter member may be, for example, made of metal materials (media) as described later.

That is to say, the filter member may be a metal fiber media including a metal fiber mat made of a plurality of unidirectionally-oriented metal fibers and having a porosity of 30 to 95%; and supports attached respectively to upper and lower surfaces of the metal fiber mat and having a porosity of 5 to 95%.

Also, the filter member may be a metal fiber media including a metal fiber mat made of longitudinally-aligned metal fiber yarns, each of the metal fiber yarns including 20 to 500 bundles of unidirectionally-oriented metal fibers and having a length of 0.45 to 0.6m per 1g and a torsion of 1 to 9 turns/m, and the metal fiber mat having a porosity of 30 to 95%; and supports attached respectively to upper and lower surfaces of the metal fiber mat and having a porosity of 5 to 95%.

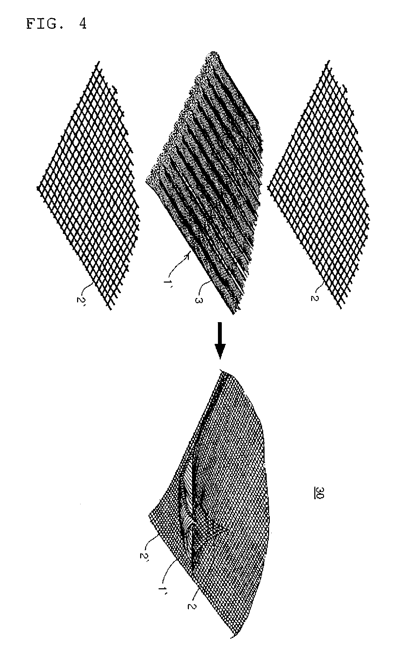

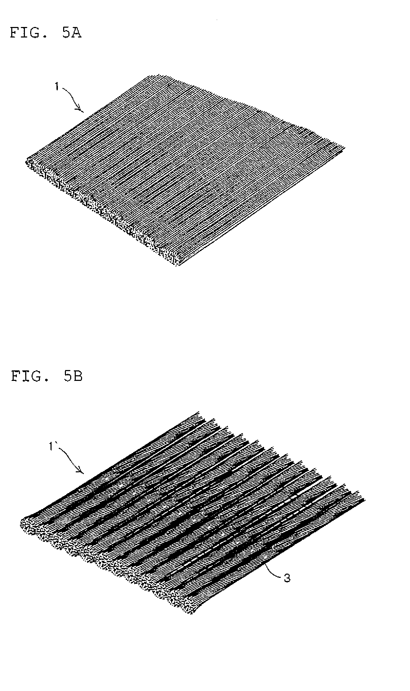

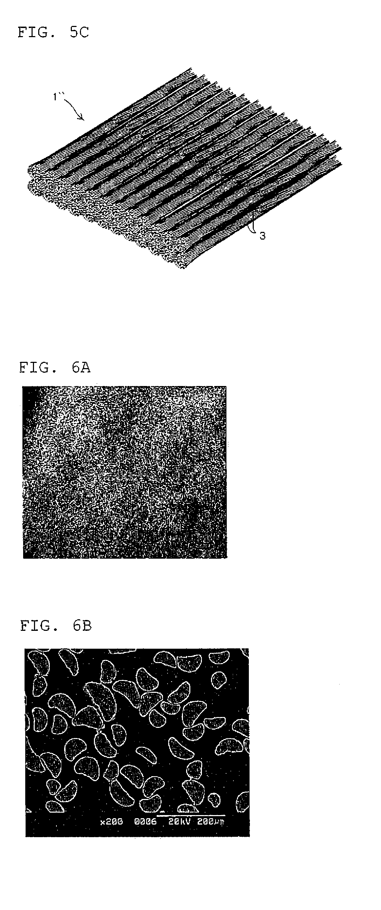

More particularly, the metal fiber media 30 as the filter member may include a metal fiber mat 1' and supports 2 and 2' attached respectively to upper and lower surfaces of the metal fiber mat 1', as shown in FIG. 4. The metal fiber media 30 may be manufactured by attaching wire meshes 2 and 2' as the supports to upper and lower surfaces of the metal fiber mat 1 made of longitudinally-aligned metal fibers (FIG. 5A), or the metal fiber mat 1' or 1" made of metal fiber yarns (FIG. 5B and 5C), as shown in FIG. 4. The wire meshes 2 and 2' are used to maintain a shape of the metal fiber mat 1, 1' or 1" and enhance strength of the metal fiber media 30. Since the metal fiber mat 1, 1' or 1" is reinforced by the supports 2 and 2' attached to the upper and lower surfaces of the metal fiber mat 1, 1' or 1", the mat in which the metal fibers or metal fiber yarns are longitudinally aligned is fixed. Accordingly, it is possible to prevent the movement of the aligned metal fibers or metal fiber yarns during a subsequent process to shape the mat into a filter having a certain shape and to increase the strength of the metal fiber media 30. The metal fiber mat 1, 1' or 1" may be manufactured with metal fibers or yarns made of the metal fibers. Various types of metal fiber mats that may be used for the metal fiber media 30 are illustrated in FIGS. 5A to 5C.

There is no particular limitation on the density of the metal fibers, but the metal fibers preferably have a density of 100 to 4,000g/m². The density of less than 100g/m² is undesirable because the equivalent diameter of pores formed in this case exceeds about 250µm. The density of more than 4,000g/m² is also undesirable because it is difficult to form a filter due to the heavy and thick structure of the filter in this case.

There is no particular limitation on the components of the metal fibers, but Fecralloy metal fibers made of an iron-chromium-aluminum-based alloy may be used as the metal fibers. Preferably, improved Fecralloy may be used which contains 0.05 to 0.5 wt%, and more preferably 0.1 to 0.3 wt% of Zr. When a mat made of Fecralloy metal fibers containing Zr within the above-mentioned content range is used for a filtering media, the mate has an excellent oxidation lifespan. Generally, Fecralloy is known. For example, Fecralloy may be used which includes 13 to 30 wt% of chromium (Cr), 3 to 7 wt% of aluminum (Al), and the balance of iron (Fe). Fecralloy preferably further includes 0.05 to 0.5 wt% of zirconium (Zr), and more preferably 0.1 to 0.3 wt% of zirconium (Zr).

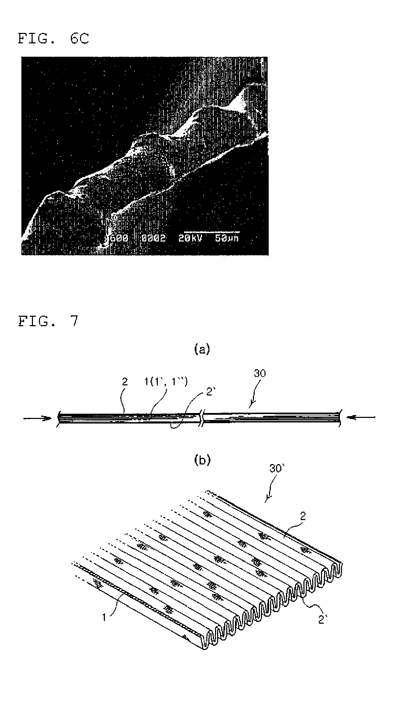

There is no particular limitation on the metal fibers, but randomly-oriented metal fibers manufactured by a melt extraction method may be used in the manufacture of the metal fibers or the yarns made of the metal fibers. The melt extraction process is a method for instantaneously extracting a metal fiber having a diameter of 20 to 70µm, the method including: positioning a circular rod having a diameter of 12 mm near an induction coil of a melting means; and melting an end of the rod to bring the melted portion of the rod into contact with a disc that rotates at a high speed of 1 to 100m/sec, as disclosed in U.S. Patent No. 6,604,570 issued in the name of the present applicant. Fine metal fibers manufactured by the melt extraction process are randomly arranged without any orientation, namely randomly oriented, as shown in FIG. 6A. The metal fibers have a half moon-shaped cross section, as shown in FIG. 6B. Each of the metal fibers has a plurality of protrusions formed in a side surface thereof, the protrusions having a height of 1 to 5µm, as shown in FIG. 6C. The metal fibers manufactured in accordance with the melt extraction process are randomly-oriented metal fibers, and therefore it is necessary to give certain directionality to the metal fibers so as to prepare a metal fiber mat using the randomly-oriented metal fibers. The directionality may be given to the metal fibers by continuously combing the randomly-oriented metal fibers several times to arrange the fine metal fibers in parallel with each other in one direction. Thus, the metal fiber mat 1 as shown in FIG. 5A may be obtained by combing randomly-oriented metal fibers manufactured in accordance with the melt extraction process to orient the metal fibers unidirectionally.

Also, the metal fiber mat may be made of metal fiber yarns. The metal fiber yarn may be manufactured by repeatedly performing the process for giving the unidirectional orientation until about 20 to 500 metal fibers are bundled into one yarn. When one yarn is made of less than 20 metal fibers, the metal fibers are not sufficiently entangled due to the small number of the metal fibers, which makes it difficult to form a yarn. On the other hand, when one yarn is made of more than 500 metal fibers, a differential pressure may be increasingly generated in the final-manufactured filter due to the excessive number of the metal fibers. In this case, there is another problem of the increase in the thickness and weight of the filter. There is no particular limitation on the metal fibers used to manufacture the yarns, but any of the metal fibers may be used herein. As described above, the metal fibers obtained in accordance with the melt extraction process can be easily formed into yarns when compared to metal fibers manufactured using a conventional machining method because it is possible to avoid the release of the metal fibers during the manufacture of yarns by virtue of the protrusions formed in surfaces of the metal fibers, the protrusions having a height of a micron level. Detail description can be referred to the disclosure of Korean Patent Application No. 2005-4249. For example, one metal fiber yarn may be formed from 20 to 500 bundles of unidirectionally-oriented metal fibers by combing randomly-oriented metal fibers several times, the randomly-oriented metal fibers being manufactured in accordance with the melt extraction method.

Also, the metal fiber yarns may be manufactured to have a length of 0.45 to 0.6m per 1g (0.45 to 0.6Nm) and a torsion of 1 to 9 turns/m. The yarn length of less than 0.45m per 1g is undesirable because the reduction in porosity occurs due to the increased length of the yarns. On the other hand, when the length of the yarns exceeds 0.6m per 1g, there is a problem in that the yarns are too thin to maintain a uniform thickness continuously. Also, the yarn torsion of less than 1 turns/m is undesirable because the metal fibers may be untangled due to the insufficient torsion of the yarns. On the other hand, when the torsion of the yarns exceeds 9 turns/m, the increase in differential pressure may be caused due to the insufficient presence of pores in the filter member. The metal fiber mat made of the metal fiber yarns is shown in FIGS. 5B and 5C.

Preferably, the metal fiber mat has a porosity of 30 to 95%. When the porosity is less than 30%, the abrupt increase in differential pressure occurs as particulate matter and dusts in exhaust gas is filtered out. On the other hand, when the porosity exceeds 95%, the pores are too large to effectively filter out particulate matter and dusts.

Preferably, the metal fiber supports have a porosity of 5 to 95%. When the porosity of the metal fiber supports is less than 5%, the strength of the metal fiber supports is high, but the differential pressure in the filter is excessively high. On the other hand, when the porosity of the metal fiber supports exceeds 95%, the differential pressure in the filter is low, but the reduction in strength may be caused. The upper and lower supports of the metal fiber mat may have the same or different porosities. The supports may also be made of the same material as the metal fibers, namely the above-described Fecralloy. The metal fibers and the supports have heat resistance.

Preferably, the metal fiber media has a thickness of 0.5 to 3mm. When the metal fiber media has a thickness of less than 0.5mm, the porosity of the metal fiber media is undesirably reduced due to the high fiber density, which leads to the increased differential pressure. On the other hand, when the metal fiber media has a thickness of greater than 3mm, the porosity of the metal fiber media is too high to filter out dusts.

When the metal fiber mat made of a plurality of unidirectionally-oriented metal fibers or the metal fiber mat made of longitudinally-aligned metal fiber yarns is used to manufacture a filter, the metal fiber mat may have a single or a multilayer structure including two or more longitudinally-laminated layers. For example, the metal fiber mat may have a single layer structure when the thickness of yarns is large, and may have a multilayer structure when the thickness of yarns is small. Also, the metal fiber mat may have a multilayer structure including two or more laminated layers, considering the physical properties required in accordance with the use of the metal fiber mat.

The filter member of the filter may be a corrugated filter member. The corrugated filter member may have more excellent smoke collecting efficiency and an ability to improve differential pressure since it has an increased contact area with exhaust gas. For example, a corrugated metal fiber media prepared by pleating a metal fiber media may be used as the filter member.

The corrugated metal fiber media can be manufactured by pleating the metal fiber media in a direction perpendicular to the longitudinal direction of the metal fibers or yarns, to form corrugations, and pressing the pleated metal fiber media in the direction of the corrugations so as to fix the corrugations. There is no particular limitation on the pleated metal fiber media. Any types of the above-mentioned metal fiber media may be pleated to form the corrugated metal fiber media. In detail, it is possible to manufacture a corrugated metal fiber media by pleating the metal fiber media manufactured using one of the metal fiber mats as shown in FIGS. 5A to 5C.

For example, forces are applied to opposite longitudinal ends of the metal fibers or metal fiber yarns in the metal fiber media 30 to be pleated as shown in FIG. 7A to pleat the metal fiber media 30 in a direction perpendicular to the longitudinal direction of the metal fibers or yarns, and the pleated metal fiber media is pressed to fix the corrugations. Thus, a metal fiber media 30' having a thickness approximately equal to the depth of the corrugations may be obtained. Preferably, the corrugation depth may range from 3 to 30mm. When the corrugation depth is less than 3mm, no effective corrugation is formed. In this case, there is no or little increase in surface area by the corrugations. On the other hand, when the corrugation depth exceeds 30mm, the metal fiber media may be deformed by the heat generated during a regeneration process or by the high pressure. When the corrugation depth is 3mm, the surface area of the metal fiber media increases by 1.5 times of the surface area of the metal fiber media obtained before the corrugations are formed. When the corrugation depth is 30mm, the surface area of the metal fiber media increases by 15 times.

The metal fiber media and corrugated metal fiber media preferably have an average pore size corresponding to an equivalent diameter of 10 to 250µm. When the equivalent diameter of the average pore size is less than 10µm, micro dusts can be efficiently filtered out, but the pores may be blocked due to the collection of micro dusts on the surface of the filter, which leads to the abrupt increase in pressure. On the other hand, when the equivalent diameter of the average pore size exceeds 250µm, the appropriate filtering characteristics cannot be obtained. When the filter manufactured by using the metal fiber media or corrugated metal fiber media as the filter member, the filter exhibits a porosity of 85 to 97%.

There is no particular limitation on the cross section of the tubular filter, but the cross section of the tubular filter may be, for example, circular, oval, or polygonal such as square or pentagonal. Preferably, the tubular filter has a cylindrical shape whose cross section is spherical. The multi-tubular filter may include two or more telescopic filter members. There is no particular limitation on the number of the telescopic filter members, but the number of the telescopic filter members may be appropriately selected, considering the efficiency and capacity of the filter. Where the filter member in the tubular filter or the multi-tubular filter is made of the above-described corrugated metal media, the filter member may have a corrugated tubular (cylindrical) structure.

In the case of the filter having a tubular structure, the ratio of equivalent diameter to length preferably ranges from 1:1.5 to 15. In the case of the filter having a multi-tubular filter, the equivalent diameter-to-length ratio of the innermost tubular filter member preferably ranges from 1:1.5 to 15. When the length is less than 1.5 times the equivalent diameter, the filtering area is reduced, compared to the volume of the filter. On the other hand, when the length is more than 15 times the equivalent diameter, the filter is too long to be installed in vehicles. Preferably, the number of corrugations in one tubular filter member of the tubular filter or the multi-tubular filter is less than or equal to 15 times the equivalent diameter of the filter when the equivalent diameter is expressed in centimeters. When the number of corrugations is greater than 15 times the equivalent diameter, the spacing between the adjacent corrugations is too narrow to provide a wide filtering surface due to the excessively large number of corrugations.

Meanwhile, the conventional ceramic filters have been used to a ceramic filter body with alumina and to support a catalyst onto the alumina. In the case of the filter made of the metal fiber media, it is, however, possible to support a metal catalyst onto the filter without using a separate alumina coating process, because the metal fibers of the metal fiber media are made of Fecralloy containing a component aluminum and the aluminum oxidizes into alumina at a high temperature. In accordance with the present invention, the metal catalyst may be at least one selected from Pt, Pd, Rh, and Ru. Therefore, the coating of the catalyst on the filter can be more easily achieved in accordance with the present invention. That is to say, after the filter is made of the filter member of the metal fiber media, the filter may be heated at 500 to 1,200°C, preferably in an oxygen atmosphere, if necessary, for 1 to 24 hours, to oxidize aluminum in the metal fiber composition into alumina, and thus to support the catalyst onto the alumina. When the heating is carried out at a temperature of 500°C or below for 1 hour or less, the aluminum is insufficiently oxidized into alumina. On the other hand, when the heating is carried out at a temperature of 1,200°C or above for 24 hours or more, the expense may be excessively high.

The filter may be used as an exhaust gas purifier, particularly as a filter for purifying particulate matter in the exhaust gas. In detail, the filter may be used as a filter for purifying exhaust gas generated in diesel engines and diesel generators.

Hereinafter, the present invention will be described in detail in conjunction with examples. These examples are made only for illustrative purposes, and the present invention is not to be construed as being limited to those examples.

### Example 1

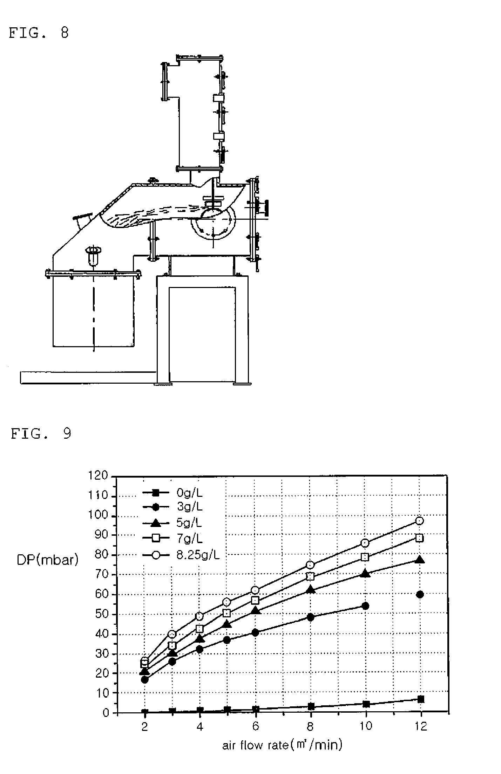

A filter was manufactured in this Example, as follows. A circular rod having a diameter of 12mm was positioned near an induction coil of a melting apparatus as shown in FIG. 8, and heated to 1,600°C to melt an end of the rod, in accordance with a method disclosed in U.S. Patent No. 6,604570. The melted end of the rod was brought into contact with a disc, which rotates at a high speed of 20m/sec, to instantaneously manufacture metal fibers having an equivalent diameter of 50µm. The manufactured metal fibers were randomly arranged without giving orientations. Here, metal fibers have a half-moon-shaped cross section and a length of about 10 to 18cm. The metal fibers had a composition including 22 weight % of chromium, 5.5 weight % of aluminum, 0.3 weight % of zirconium, and the balance of iron (Fe).

Until 80 strands of unidirectionally-oriented metal fibers are formed, the randomly-oriented metal fibers were continuously combed to form a metal fiber yarn. The prepared metal fiber yarns had a length of 0.55m per 1g, and a torsion of 8 turns/m. Then, the metal fiber yarns were longitudinally aligned with two layers to form a metal fiber mat. The metal fibers mat of the inventive example 1 had a density of 1.5kg/m² and a porosity pf 85%.

A metal fiber media was then prepared by attaching heat-resistant wire meshes (as supports) having porosities of 45% and 72% to upper and lower surfaces of the metal fiber mat, respectively. The wire meshes had a composition including 18 weight % of chromium, 3.0 weight % of aluminum, and the balance of iron (Fe). The prepared metal fiber media had a thickness of 1.0mm, and an average pore size corresponding to an equivalent diameter of 40µm.

The prepared metal fiber media was pleated to a depth of 8mm, and then pressed at 1kg/cm² to form a cylindrical filter member having a diameter of 70mm, a length of 300mm, and 52 corrugations. Then, both opposite ends of the filter member were welded so that the opposite ends of the filter member can be alternately arranged as shown in FIG. 2A, slots were formed at joints of the filter member that were formed in an end of an exhaust gas inlet, and a fixing member was installed in both ends of the filter to obtain a filter having a volume of 6.4C. The slots were formed in an equal distance in the joints of the filter member within the area range corresponding to 35% of the sectional area of the exhaust gas pipe having a diameter of 50mm.

Smokes were collected in the prepared filters at amount of 0 g/L, 3 g/L, 5 g/L, 7 g/L and 8.25 g/L, respectively. Then, the change in differential pressure was measured according to the smoke collecting capacity by passing the air through the filters at a flow rate of 2 to 12 m²/min. The measured change in differential pressure was shown in FIG. 9. As shown in FIG. 9, the filter has a differential pressure of less than 100 mbar when 8.25 g/L of the smokes were collected in the filter.

Also, the smoke reduction ratio by the filter was determined by collecting 0 g/L and 9g/L of smokes in the prepared filters, respectively, and measuring a level of smokes before/after installing the filter using a Lug-Down test where a load increases by 10% at the maximum RPM. That is to say, a level of smokes were measured as a load test for measuring a level of smokes discharged from vehicles as RPM was reduced two times by 10% from the maximum RPM (3,400 RPM). The level of smokes was measured three times under the same conditions (Modes 1 to 3), and the results of the smoke reduction ratio were listed in the following Table 1.

**[Table 1]**

| | Filter 1 (Collected smoke: 0 g/L) | | | Filter 2 (Collected smoke: 9 g/L) | | |
|---|---|---|---|---|---|---|
| | Mode 1 | Mode 2 | Mode 3 | Mode 1 | Mode 2 | Mode 3 |
| Level of smoke | 63% | 60% | 58% | 63% | 60% | 58% |
| before installation of filter | | | | | | |
| Level of smoke after installation of filter | 28% | 24% | 22% | 41% | 36% | 35% |
| Reduction ratio | 56% | 60% | 62% | 35% | 40% | 40% |

As listed in the Table 1, it was revealed that the filter according to the present invention having slots formed at the joints of the filter member has an excellent smoke reduction ratio of 35% or more when 9g/L of the smokes are caught in the filter member.

## Claims

1. A filter having a tubular structure in which a plurality of filter members are arranged telescopically, wherein each of the filter members is made of a plurality of metal fibers, ends of the two adjacent filter members are jointed to each other by a joint, and the joint in an end of one filter member is alternately arranged on another joint in an end of the other filter member, the filter being **characterized in that** a plurality of slots are formed in at least one joints in two opposite ends of each filter member, and the slots are formed at the joints formed in exhaust gas inlets of the filter.

2. The filter of claim 1, wherein the slots have an area that is less than or equal to 50% of a sectional area of an exhaust gas pipe.

3. The filter of claim 1, wherein the slots are formed at an equal distance.

4. The filter of claim 1, wherein the slots are formed at the joints formed in both ends of the filter member.

5. The filter of claim 1, wherein the filter member is a metal fiber media comprising a metal fiber mat made of a plurality of unidirectionally-oriented metal fibers and having a porosity of 30 to 95%, and supports attached respectively to upper and lower surfaces of the metal fiber mat and having a porosity of 5 to 95%.

6. The use of a filter according to claim 1 for purifying exhaust gas emitted from a diesel engine or a diesel generator.

7. An exhaust system for a diesel engine or a diesel generator comprising a filter according to any of claims 1 to 5, wherein the slots are formed at the joints formed in exhaust gas inlets of the filter.

## Patentansprüche

1. Filter mit röhrenförmiger Struktur, in der mehrere Filterglieder teleskopartig angeordnet sind, wobei jedes der Filterglieder aus einer Mehrzahl von Metallfasern besteht, Enden der zwei benachbarten Filterglieder durch eine Verbindungsstelle miteinander verbunden sind und die Verbindungsstelle in einem Ende des einen Filterglieds alternierend an einer anderen Verbindungsstelle in einem Ende des anderen Filtergliedes angeordnet ist,
wobei der Filter **dadurch gekennzeichnet ist,**
**dass** in wenigstens einer Verbindungsstelle in zwei entgegengesetzten Enden jedes Filterglieds mehrere Schlitze ausgebildet sind
und
**dass** die Schlitze an den in Abgaseinlässen des Filters ausgebildeten Verbindungsstellen ausgebildet sind.

2. Filter nach Anspruch 1, wobei die Schlitze eine Fläche aufweisen, die gleich oder kleiner 50 % einer Querschnittsfläche eines Abgasrohrs ist.

3. Filter nach Anspruch 1, wobei die Schlitze in gleichem Abstand ausgebildet sind.

4. Filter nach Anspruch 1, wobei die Schlitze an den in beiden Enden des Filterglieds ausgebildeten Verbindungsstellen ausgebildet sind.

5. Filter nach Anspruch 1, wobei das Filterglied ein Metallfasermedium ist, das eine Metallfasermatte, die aus mehreren unidirektional verlaufenden Metallfasern besteht und eine Porosität von 30 bis 95 % aufweist, und Träger, die an der Oberseite und Unterseite der Metallfasermatte angebracht sind und eine Porosität von 5 bis 95 % aufweisen, umfasst.

6. Verwendung eines Filters nach Anspruch 1 zur Reinigung von Abgas, das aus einem Dieselmotor oder einem Dieselgenerator ausgestoßen wird.

7. Abgassystem für einen Dieselmotor oder einen Dieselgenerator, das einen Filter nach einem der Ansprüche 1 bis 5 umfasst, wobei die Schlitze an den in Abgaseinlässen des Filters ausgebildeten Verbindungsstellen ausgebildet sind.

## Revendications

1. Filtre ayant une structure tubulaire dans laquelle une pluralité d'éléments de filtre sont agencés de façon télescopique, dans lequel chacun des éléments de filtre est constitué d'une pluralité de fibres métalliques, des extrémités des deux éléments de filtre adjacents sont jointes l'une à l'autre par un raccord, et le raccord dans une extrémité d'un élément de filtre est agencé de façon alternée sur un autre raccord dans une extrémité de l'autre élément de filtre, le filtre étant **caractérisé en ce qu'**une pluralité de fentes sont formées dans au moins un raccord dans deux extrémités opposées de chaque élément de filtre, et les fentes sont formées au niveau des raccords formés dans les entrées de gaz d'échappement du filtre.

2. Filtre selon la revendication 1, dans lequel les fentes ont une superficie qui est inférieure ou égale à 50% d'une superficie en coupe d'un tuyau de gaz d'échappement.

3. Filtre selon la revendication 1, dans lequel les fentes sont formées à égale distance.

4. Filtre selon la revendication 1, dans lequel les fentes sont formées au niveau des raccords formés dans les deux extrémités de l'élément de filtre.

5. Filtre selon la revendication 1, dans lequel l'élément de filtre est un support en fibres métalliques comprenant un mat de fibres métalliques constitué d'une pluralité de fibres métalliques orientées unidirectionnellement et ayant une porosité de 30 à 95%, et des supports fixés respectivement à des surfaces supérieure et inférieure du mat de fibres métalliques et ayant une porosité de 5 à 95%.

6. Utilisation d'un filtre selon la revendication 1 pour purifier des gaz d'échappement émis d'un moteur diesel ou d'un générateur diesel.

7. Système d'échappement pour un moteur diesel ou un générateur diesel comprenant un filtre selon l'une quelconque des revendications 1 à 5, dans lequel les fentes sont formées au niveau des raccords formés dans des entrées de gaz d'échappement du filtre.
